(19) Europäisches Patentamt / European Patent Office / Office européen des brevets

(11) **EP 2 985 360 B1**

(12) **EUROPEAN PATENT SPECIFICATION**

(45) Date of publication and mention
of the grant of the patent:
**11.07.2018 Bulletin 2018/28**

(51) Int Cl.:
*C22C 38/00* (2006.01)     *C21D 8/12* (2006.01)
*C22C 38/60* (2006.01)     *H01F 1/16* (2006.01)
*H01F 41/02* (2006.01)

(21) Application number: **14783448.5**

(22) Date of filing: **08.04.2014**

(86) International application number:
**PCT/JP2014/060164**

(87) International publication number:
**WO 2014/168136 (16.10.2014 Gazette 2014/42)**

(54) **NON-ORIENTED MAGNETIC STEEL SHEET AND METHOD FOR PRODUCING SAME**

NICHTORIENTIERTES MAGNETISCHES STAHLBLECH UND VERFAHREN ZUR HERSTELLUNG DESSELBEN

TÔLE D'ACIER MAGNÉTIQUE NON ORIENTÉE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2013 JP 2013081078**

(43) Date of publication of application:
**17.02.2016 Bulletin 2016/07**

(73) Proprietor: **Nippon Steel & Sumitomo Metal Corporation**
**Tokyo 100-8071 (JP)**

(72) Inventors:
• **KATAOKA Takashi**
**Tokyo 100-8071 (JP)**
• **ARITA Yoshihiro**
**Tokyo 100-8071 (JP)**
• **TAKAHASHI Fumiaki**
**Tokyo 100-8071 (JP)**
• **KUROSAKI Yousuke**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
WO-A1-2006/033286     WO-A1-2012/141206
WO-A2-2012/087045     JP-A- 2004 300 517
JP-A- 2005 200 713     JP-A- 2005 344 179

• JENKINS K ET AL: "Precipitates in electrical steels", JOURNAL OF MAGNETISM AND MAGNETIC MATERIALS, ELSEVIER, AMSTERDAM, NL, vol. 320, no. 20, 1 October 2008 (2008-10-01), pages 2423-2429, XP023905214, ISSN: 0304-8853, DOI: 10.1016/J.JMMM.2008.03.062 [retrieved on 2008-04-29]
• TAKASHI KATAOKA ET AL.: 'Ferrite-ko ni Okeru Cu Ryukabutsu no Koyo Kyodo' CURRENT ADVANCES IN MATERIALS AND PROCESSES vol. 25, 01 September 2012, page 1080, XP008181211

**Description**

[Technical Field of the Invention]

The present invention relates to a non-oriented electrical steel sheet which is used as a core material of an electrical device and a method of manufacturing the same, and more particularly, to a non-oriented electrical steel sheet having excellent core loss and a method of manufacturing the same.
Priority is claimed on Japanese Patent Application No. 2013-081078, filed on April 9, 2013, the content of which is incorporated herein by reference.

[Related Art]

A non-oriented electrical steel sheet is used as a core material of various types of motors for heavy electrical apparatuses, home appliances, and the like. The non-oriented electrical steel sheet is commercially graded according to core loss, and is classified according to the design features of motors or transformers. Recently, from the viewpoint of energy saving, a further reduction in core loss and an increase in magnetic flux density have been strongly demanded of the non-oriented electrical steel sheet.
In general, when fine precipitates are present in a steel sheet, grain growth during annealing is retarded, and core loss is deteriorated. Particularly, Cu which is unavoidably incorporated into the steel sheet generates Cu sulfide, and the fine Cu sulfide inhibits the grain growth of the non-oriented electrical steel sheet. As a result, core loss is deteriorated. In addition, the fine Cu sulfide which is present in the steel sheet causes a deterioration in hysteresis loss. The deterioration in hysteresis loss also causes the deterioration in core loss.
Here, in the related art, for the purpose of improving the core loss of a non-oriented electrical steel sheet, methods such as precipitation control of sulfide during hot rolling, a method of reducing the amount of sulfide through desulfurization, and suppression of precipitation of Cu sulfide through rapid cooling after final annealing have been proposed.
For example, in Patent Document 1, a method of controlling the dispersion state of Cu sulfide to a preferable state for magnetic properties of a non-oriented electrical steel sheet, that is, core loss and magnetic flux density by holding a slab containing 0.2% or less of Cu in a range of 900°C to 1100°C for 30 minutes or longer, thereafter holding the slab at a higher temperature of 1150°C and subsequently starting rolling, and limiting a cooling rate during finish hot rolling to be 50 °C/sec or lower is disclosed. However, in this method, there are problems in productivity, such as an increase in rolling load due to a reduction in slab heating temperature and a difficulty in strict control of the cooling rate.
In Patent Document 2, a method of avoiding the generation of fine precipitates by adding CaSi to molten steel until the completion of casting to control the S content to be 0.005% or less, heating a slab to a temperature of 1000°C or higher and then hot-rolling the slab, and coiling a coil at a specific temperature range is disclosed. In this method, high purity steel is essential. However, the formation of fine Cu sulfide due to Cu which is incorporated at an unavoidable level cannot be avoided. Therefore, there is a problem in that magnetic properties are rather deteriorated by the incorporation of Cu.
In addition, in Patent Document 3, a technique of suppressing the precipitation of Cu sulfide by performing rapid cooling from a temperature range of 500°C to 600°C to 300°C at a cooling rate of 10 °C/sec to 50 °C/sec after final annealing is disclosed. However, the fact that Cu sulfide is precipitated even during cooling at a cooling rate of 50 °C/sec or higher is known in Non-Patent Documents 1 and 2, and the like. That is, in the technique of Patent Document 3 in which cooling is performed at a cooling rate of 10 °C/sec to 50 °C/sec, it is difficult to completely eliminate the precipitation of Cu sulfide.
In Patent Documents 4 to 6, a technique in which an enhancement in magnetic properties is expected by suppressing the cooling rate after final annealing is disclosed. However, in this method, it may not be possible to make Cu sulfide harmless. WO 2012 141 206 discloses a non-oriented steel sheet having a density of sulphide particles in the microstructure to achieve good magnetic properties.

[Prior Art Document]

[Patent Document]

   [Patent Document 1] Japanese Unexamined Patent Application, First Publication No. 2010-174376
   [Patent Document 2] Japanese Unexamined Patent Application, First Publication No. H10-183244
   [Patent Document 3] Japanese Unexamined Patent Application, First Publication No. H09-302414

[Patent Document 4] Japanese Unexamined Patent Application, First Publication No. 2011-006721
[Patent Document 5] Japanese Unexamined Patent Application, First Publication No. 2006-144036
[Patent Document 6] Japanese Unexamined Patent Application, First Publication No. 2003-113451

[Non-Patent Document]

[Non-Patent Document 1] CAMP-ISIJ Vol.25 (2012), p1080
[Non-Patent Document 2] CAMP-ISIJ Vol.22 (2009), p1284
[Non-Patent Document 3] J. Flux Growth Vol.5 (2010), p48
[Non-Patent Document 4] Materials Transactions Vol.53 (2012), P645
[Non-Patent Document 5] Tetsu-to-Hagane Vol.83 (1997), p479
[Non-Patent Document 6] Tetsu-to-Hagane Vol.92 (2006), p609

[Disclosure of the Invention]

[Problems to be Solved by the Invention]

The present invention has been made taking the foregoing circumstances into consideration, and an object thereof is to provide a non-oriented electrical steel sheet having excellent core loss and a method of manufacturing the same without causing an increase in cost or a reduction in productivity by making Cu sulfide harmless and increasing the grain size.

[Means for Solving the Problem]

In order to solve the above-described problems, in the present invention, an effect of the chemical components and manufacturing conditions of a steel sheet on the relationship between the state of sulfide and core loss was repeatedly examined. As a result, it was found that there was a case where non-oriented electrical steel sheets obtained under different manufacturing conditions had significantly different core losses even though the sizes or the number densities of sulfide, which are hitherto known to affect core loss, were at the same level. Here, the inventors conducted more detailed examination on the morphology or structure of sulfide, and found a possibility that a difference in core loss might be caused by a difference in atomic structure of Cu sulfide, and specifically, a possibility that the consistency between the crystal lattice of Fe as a primary phase and Cu sulfide might affect magnetic domain wall motion. The present invention has been made based on the above-described findings, and is summarized in the following (1) to (8).

(1) That is, a non-oriented electrical steel sheet according to an aspect of the present invention includes chemical compositions including, in terms of mass%: C: 0.0001% to 0.01%; Si: 0.05% to 7.0%; Mn: 0.01% to 3.0%; Al: 0.0020% to 3.0%; S: 0.0001% to 0.1%; P: 0.0010% to 0.15%; N: 0.0010% to 0.01%; Cu: 0.01% to 5.0%; and a remainder including Fe and impurities, in which $I_{2\theta=46.4}$ which is a diffraction intensity of Cu sulfide having a hexagonal structure shown at $2\theta$=46.4° and $I_{2\theta=32.3}$ which is a diffraction intensity of Cu sulfide having a cubic structure shown at $2\theta$=32.3°, which are obtained through a X-ray diffraction of an electrolytic extraction residue, satisfy the following Expression 1.

$$I_{2\theta=46.4} / I_{2\theta=32.3} \leq 0.5 \ldots \text{Expression 1}$$

(2) In the non-oriented electrical steel sheet described in (1), when a Cu content, in terms of mass%, is denoted as [%Cu] and an S content, in terms of mass%, is denoted as [%S], the [%Cu] and the [%S] may satisfy $[\%Cu] / [\%S] \geq 2.5$.
(3) In the non-oriented electrical steel sheet described in (1) or (2), 0.5 pieces/$\mu m^3$ to 50 pieces/$\mu m^3$ of sulfide containing Cu and having a diameter of 5 nm to 500 nm may be contained.
(4) A method of manufacturing a non-oriented electrical steel sheet according to another aspect of the present invention, is a method of manufacturing the non-oriented electrical steel sheet described in any one of (1) to (3), and includes: performing a hot rolling on a slab to obtain a hot-rolled steel sheet; annealing the hot-rolled steel sheet; pickling the hot-rolled steel sheet; performing a cold rolling on the hot-rolled steel sheet to obtain a cold-rolled steel sheet; and annealing the cold-rolled steel sheet, in which, in the annealing of the cold-rolled steel sheet, after the cold-rolled steel sheet is held at T1°C, which is represented in the following Expression 2, to 1530°C for 30 seconds to 3600 seconds, when an average cooling rate from the T1°C to T2°C, which is shown in Expression 3, is denoted as CR1 in the unit of °C/sec and an average cooling rate from the T2°C to T3°C, which is shown in Expression 4, is denoted as CR2 in the unit of °C/sec, the cold-rolled steel sheet is cooled to a temperature range of the T3°C or lower so that the CR1 and the CR2 satisfy Expressions 5, 6 and 7:

$$T1 = 17000 / (14 - \log_{10}([\%Cu]^2 \times [\%S])) - 273 \ldots \text{Expression 2}$$

$$T2 = 17000 / (14 - \log_{10}([\%Cu]^2 \times [\%S])) - 323 \ldots \text{Expression 3}$$

$$T3 = 17000 / (14 - \log_{10}([\%Cu]^2 \times [\%S])) - 473 \ldots \text{Expression 4}$$

$$CR1 > CR2 \ldots \text{Expression 5}$$

$$5 \leq CR1 \leq 500 \ldots \text{Expression 6}$$

$$0.5 \leq CR2 \leq 50 \ldots \text{Expression 7}$$

where [%Cu] is a Cu content in terms of mass% and [%S] is an S content in terms of mass%.

(5) In the method of manufacturing a non-oriented electrical steel sheet described in (4), the CR1 may further satisfy the following Expression 8.

$$CR1 > 20 \ldots \text{Expression 8}$$

(6) In the method of manufacturing a non-oriented electrical steel sheet according to claim (4) or (5), the CR2 may further satisfy the following Expression 9.

$$CR2 \leq 20 \ldots \text{Expression 9}$$

(7) the method of manufacturing a non-oriented electrical steel sheet described in any one of (4) to (6), may further include: subsequent to the annealing of the cold-rolled steel sheet, holding the cold-rolled steel sheet in a temperature range of the T2°C or lower to the T3°C or higher for 30 seconds or longer as an additional annealing.

(8) In the method of manufacturing a non-oriented electrical steel sheet described in any one of (4) to (7), in the annealing of the hot-rolled steel sheet, the hot-rolled steel sheet may be cooled so that CR3 which is an average cooling rate from the T1°C to room temperature is 15 °C/sec or higher.

[Effects of the Invention]

According to the above aspects of the present invention, even when high purification, a reduction in slab heating temperature, optimization of hot rolling conditions, and the like are not performed on the non-oriented electrical steel sheet, it is possible to make fine Cu sulfide harmless. Accordingly, a non-oriented electrical steel sheet having excellent core loss can be provided.

In addition, according to the above aspects of the present invention, properties (magnetic flux density, workability, and the like) other than core loss, required of a non-oriented electrical steel sheet, can be ensured to be the same or a higher level than a material in the related art.

[Brief Description of the Drawings]

FIG. 1 is a graph showing the relationship between $I_{2\theta=46.4} / I_{2\theta=32.3}$ and core loss.
FIG. 2 is a flowchart showing an example of a process of manufacturing a non-oriented electrical steel sheet according to an embodiment.

[Embodiments of the Invention]

Hereinafter, a non-oriented electrical steel sheet according to an embodiment of the present invention (may also be referred to as anon-oriented electrical steel sheet according to this embodiment) and a method of manufacturing the same will be described in detail. All of % of contents are mass%.

C: 0.0001% to 0.01%

C causes significant deterioration in core loss through magnetic aging. Therefore, the upper limit of the C content is 0.01%. From the viewpoint of the improvement in core loss, the C content is preferably 0.0020% or less. On the other hand, when the C content is less than 0.0001%, the magnetic flux density is deteriorated. Therefore, in order to ensure a sufficient magnetic flux density, the lower limit of the C content is 0.0001%. The C content is preferably 0.0005 to 0.0015%, and more preferably 0.0007 to 0.0010%.

Si: 0.05% to 7.0%

The Si content is 0.05% to 7.0% for a balance between ensuring core loss and a sheet travelling property. When the Si content is less than 0.05%, good core loss is not obtained. On the other hand, when the Si content is more than 7.0%, the steel sheet becomes embrittled, and the sheet travelling property during a manufacturing process is significantly deteriorated. The Si content is preferably 2.3% to 3.5%, more preferably 2.9% to 3.3%, and still more preferably 3.0% to 3.2%.

Mn: 0.01% to 3.0%

Mn reacts with S and forms sulfide, and is thus an important element in the present invention. In a case where Mn is present in steel, MnS is precipitated and thus the transition temperature of the crystal structure of Cu sulfide is reduced. In this case, Cu sulfide having a cubic structure is less likely to be generated. Therefore, the upper limit of the Mn content is 3.0%. On the other hand, when the Mn content is less than 0.01%, the steel sheet becomes embrittled during hot rolling. Therefore, the lower limit of the Mn content is 0.01%. The Mn content is preferably 0.05% to 2.0%, and more preferably 0.1% to 1.0%.

Al: 0.0020% to 3.0%

Al is solutionized in steel, resulting in the electric resistance of steel is increased and core loss is reduced. Therefore, in order to improve core loss (reduce core loss), increasing the Al content in steel is advantageous. However, molten steel having a high Al content causes deterioration in operability during casting and thus causes embrittlement of the steel sheet. Therefore, the upper limit of the Al content is 3.0%. On the other hand, when the Al content is low, AlN which accelerates grain growth in the steel sheet is not sufficiently generated, and fine TiN that impedes the grain growth is generated instead of AlN, resulting in significant deterioration in the magnetic flux density. Therefore, the lower limit of the Al content is 0.0020%. The Al content is preferably 0.1% to 2.0%, and more preferably 1.0% to 1.5%.

S: 0.0001% to 0.1%

The S content is directly associated with the amount of sulfide. When the S content is excessive, S is present in steel in a solid solution state, and steel becomes embrittled during hot rolling. Therefore, the upper limit of the S content is 0.1%. On the other hand, when the S content is less than 0.0001%, the precipitation temperature range (a temperature range of T2°C to T3°C, which will be described later) of Cu sulfide (cubic) is more significantly reduced than the grain growth temperature of the steel sheet, and thus the effect of improving core loss is not obtained. Therefore, the lower limit of the S content is 0.0001%. The S content is preferably 0.01% to 0.05%, and more preferably 0.02% to 0.03%.

P: 0.0010% to 0.15%

P has an effect of increasing the hardness of the steel sheet and enhancing a blanking property. In addition, a small amount of P has an effect of improving the magnetic flux density. In order to obtain this effect, the lower limit of the P content is 0.0010%. Here, when the P content is excessive, the magnetic flux density is deteriorated, and thus the upper limit of the P content is 0.15%. The P content is preferably 0.005% to 0.1%, and more preferably 0.01% to 0.07%.

N: 0.0010% to 0.01%

N is an element which forms nitride with Ti and the like. When the N content is excessive, the precipitation amount of nitride such as TiN is increased, and this nitride impedes the grain growth. Therefore, the upper limit of the N content is 0.01%. Here, a small amount ofN contained suppresses precipitation of fine TiC, and thus an effect of accelerating the grain growth of the steel sheet is obtained. Therefore, for the purpose of ensuring a sufficient magnetic flux density, the lower limit of the N content is 0.0010%. The N content is preferably 0.0030% to 0.0080%, more preferably 0.0040% to 0.0080%, and still more preferably 0.0050% to 0.0070%.

Cu: 0.01% to 5.0%

Cu is an element which forms sulfide like Mn, and is a particularly important element. When the Cu content is too high, Cu is solutionized in the steel sheet, and the solid solution Cu causes embrittlement of the steel sheet during hot rolling. Therefore, the upper limit of the Cu content is 5.0%. On the other hand, in order to allow Cu sulfide to be precipitated prior to MnS during hot rolling, the generation temperature of Cu sulfide needs to be a high temperature, and the lower limit of the Cu content needs to be 0.01%. The Cu content is preferably 0.1% to 1.5%, and more preferably 0.8% to 1.2%.

The non-oriented electrical steel sheet according to this embodiment basically contains the above-described chemical components, and the remainder including Fe and impurities. However, for the purpose of further enhancement in magnetic properties, the enhancement in properties such as strength, corrosion resistance, and fatigue properties required of a structural member, the enhancement in casting properties or sheet travelling properties, and the enhancement in productivity by using scrap or the like, a small amount of elements such as Mo, W, In, Sn, Bi, Sb, Ag, Te, Ce, V, Cr, Co, Ni, Se, Re, Os, Nb, Zr, Hf, and Ta may be contained in a range of 0.5% or less in total. In addition, when such elements are incorporated within a range of 0.5% or less in total, the effect of this embodiment is not damaged. Elements which generate sulfides such as Mg, Ca, Zn, and Ti affect the solid solution temperature of Cu sulfide, and thus the sum of the amounts thereof is preferably 0.2% or less.

Next, the state of Cu sulfide which is an important control factor in the non-oriented electrical steel sheet according to this embodiment will be described.

The inventors found that there are at least two types of structures as the structure of Cu sulfide contained in the steel sheet. One is a cubic structure, and the other is a hexagonal structure (hexagonal close-packed structure). The cubic structure has a stable phase, and the hexagonal structure has a metastable phase.

It is difficult to completely remove the presence of sulfide in the steel sheet. Therefore, in the non-oriented electrical steel sheet according to this embodiment, S is allowed to be actively precipitated as Cu sulfide and the precipitated Cu sulfide is controlled to mainly contain sulfide having the cubic structure, thereby avoiding the deterioration in core loss. Therefore, controlling the crystal structure of Cu sulfide is very important.

In this embodiment, for example, when X-ray diffraction (XRD) is performed on the electrolytic extraction residue of the steel sheet, $I_{2\theta=46.4}$ which is the diffraction intensity of Cu sulfide (hexagonal) at $2\theta=46.4\pm2°$ and $I_{2\theta=32.3}$ which is the diffraction intensity of Cu sulfide (cubic) at $2\theta=32.3\pm2°$ are controlled to satisfy the following Expression 1.

$$I_{2\theta=46.4} / I_{2\theta=32.3} \leq 0.5 \ldots \text{Expression 1}$$

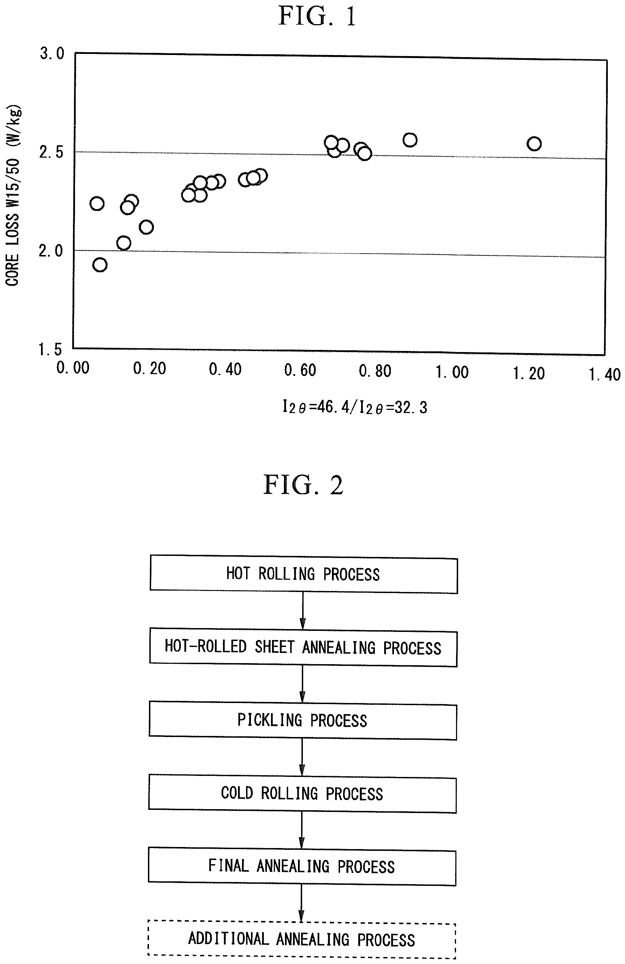

As shown in FIG. 1, as $I_{2\theta=46.4} / I_{2\theta=32.3}$ is reduced, core loss is improved.

The lower limit of $I_{2\theta=46.4} / I_{2\theta=32.3}$ does not need to be particularly limited. However, in a case where Cu sulfide having the hexagonal structure is absent, $I_{2\theta=46.4} / I_{2\theta=32.3}$ becomes zero, and this value may be the lower limit.

In addition, in this embodiment, Cu sulfide (hexagonal) indicates Cu sulfide having the hexagonal structure, and Cu sulfide (cubic) indicates Cu sulfide having the cubic structure. In addition, the identification of diffraction peaks may be collated by using JCPDS-CARD which is a database of crystal lattices. For example, Cu sulfide (hexagonal) can be identified by using JCPDS-CARD: 00-023-0958 or the like, and Cu sulfide (cubic) can be identified by using JCPDS-CARD: 00-024-0051 or the like. In addition, in Cu sulfide in iron, the chemical bond ratio of S to Cu is changed in a range of 1:1 to 2:1 due to the solid solution of Fe or Mn atoms, and the like. Therefore, $2\theta$ has a margin of error of $\pm2°$. In general, an XRD diffraction intensity is a height from the background to the peak of a spectrum. The XRD diffraction intensity (peak intensity) in this embodiment is also obtained by removing the background using the software described in Non-Patent Documents 3 and 4.

There is concern that fine FeS or fine MnS which is sulfide other than Cu sulfide may cause the deterioration in core loss. Therefore, it is preferable that Cu sulfide is allowed to be actively precipitated by sufficiently increasing the Cu content with respect to the S content. Specifically, when the Cu content is denoted as [%Cu] and the S content is denoted as [%S] in terms of mass%, it is preferable that the Cu content and the Mn content are controlled to satisfy [%Cu] / [%S] ≥ 2.5. 120 ≥ [%Cu] / [%S] > 40 is more preferable, and 70 > [%Cu] / [%S] > 50 is still more preferable.

Furthermore, when the Mn content is denoted as [%Mn] in terms of mass%, a case where ([%Cu] × [%Mn]) / [%S] ≥ 2 is satisfied is still more preferable from the viewpoint of the improvement in core loss. The reason why core loss is improved by satisfying ([%Cu] × [%Mn]) / [%S] ≥ 2 is not clear. However, the inventors think the reason is that the generation of Cu sulfide (cubic) tends to be accelerated by the effect of Mn. ([%Cu] × [%Mn]) / [%S] ≥ 15 is more preferable.

In addition, in the non-oriented electrical steel sheet according to this embodiment, in order to further improve core loss, it is preferable that sulfide which contains Cu and has a diameter of 5 nm to 500 nm is present in the steel sheet at a number density per unit area of 0.5 pieces/$\mu$m$^3$ to 50 pieces/$\mu$m$^3$. When the number density of sulfide is less than 0.5 pieces/$\mu$m$^3$, the effect cannot be sufficiently obtained. Therefore, the number density of sulfide is preferably 0.5 pieces/$\mu$m$^3$ or higher. On the other hand, when the number density is higher than 50 pieces/$\mu$m$^3$, grain growth properties are deteriorated, and thus there is concern of the deterioration in magnetic flux density. Therefore, the upper limit of the number density is preferably 50 pieces/$\mu$m$^3$. In order to reliably improve core loss, the number density of sulfide is preferably in a range of 0.5 pieces/$\mu$m$^3$ to 1.0 pieces/$\mu$m$^3$, and is more preferably in a rage of 0.5 pieces/$\mu$m$^3$ to 0.7 pieces/$\mu$m$^3$. The observation of precipitates containing sulfide described above may be performed on the steel sheet having a corroded surface with an SEM (scanning electron microscope) or a TEM (transmission electron microscope) according to an extraction replica method or a thin film method. In general, Cu sulfide is extremely fine (for example, smaller than 5 nm). However, in the non-oriented electrical steel sheet according to this embodiment, the crystal structure of Cu sulfide is mainly cubic, and thus sulfide becomes coarse. Accordingly, the diameter of Cu sulfide can be controlled to be in a range of 5 nm to 500 nm. Regarding core loss, a preferable Cu sulfide diameter is 50 nm to 300 nm, and a more preferable Cu sulfide diameter is 100 nm to 200 nm.

Cu sulfide needs to mainly contain sulfide having the cubic structure as its crystal structure, and thus the X-ray diffraction intensity obtained by XRD may satisfy $I_{2\theta=46.4}$ / $I_{2\theta=32.3}$ ≤ 0.5 as described above. On the other hand, in a case where Cu sulfide is directly observed by a microscope, it is preferable that most of the observed Cu sulfide has the cubic structure, that is, the volume fraction of Cu sulfide having the cubic structure is 50% or more of the total of Cu sulfide. The volume fraction of Cu sulfide having the cubic structure is more preferably 66.7%, and still more preferably 80%. Here, Cu sulfide includes not only the precipitates of Cu sulfide alone, but also the precipitates which are compositely precipitated with other sulfides, oxides or carbides such as MnS and TiS. Furthermore, precipitates in which metal atoms such as Mn or Fe are solutionized in Cu sulfide, such as Cu(Mn)S or Cu(Fe)S, are also included.

In a case where Cu sulfide precipitates with MnS as composite precipitates, according to X-ray diffraction (XRD) performed by using the electrolytic extraction residue, it is preferable that $I_{2\theta=34.3}$ which is the diffraction intensity of Mn sulfide (cubic) at $2\theta$=34.3° and $I_{2\theta=32.3}$ which is the diffraction intensity of Cu sulfide (cubic) at $2\theta$=32.3° satisfy the conditions of the following Expression 1-2.

$$0.001 < I_{2\theta=32.3} / I_{2\theta=34.3} < 10 \ldots \text{Expression 1-2}$$

It is more preferable to satisfy $0.02 < I_{2\theta=32.3} / I_{2\theta=34.3} < 5$, and it is still more preferable to satisfy $0.05 < I_{2\theta=32.3} / I_{2\theta=34.3} < 1.5$.

A preferable method of manufacturing the non-oriented electrical steel sheet according to this embodiment will be described.

The non-oriented electrical steel sheet according to this embodiment can be manufactured by performing hot rolling, hot-rolled sheet annealing, cold rolling, final annealing, and the like on a slab which is melted in a converter and is subjected to continuous casting, in the same manner as a typical electrical steel sheet.

In the hot rolling, regardless of a hot rolling method such as hot direct rolling or continuous hot rolling and a slab heating temperature, the effect of improving core loss can be obtained. In the cold rolling, regardless of a cold rolling method such as cold rolling performed two or more times or warm rolling and a cold rolling reduction, the effect of improving core loss can be obtained. In addition to these processes, a process of forming an insulating film, a decarburization process, and the like may also be performed. In addition, there is no problem even when the non-oriented electrical steel sheet is manufactured by not a typical process but processes using a thin slab without hot rolling, a process using a thin strip according to a rapid cooling solidification method or, a continuous casting method.

However, in a case of obtaining the non-oriented electrical steel sheet according to this embodiment, in a final annealing process, it is important to undergo a thermal history described as follows. That is, it is important (A) to allow the total amount of Cu sulfide to be solutionized during the final annealing, and (B) to reduce the amount of time for staying in a temperature range in which sulfides other than Cu sulfide having the cubic structure are precipitated and increase the amount of time for staying in a temperature range in which Cu sulfide having the cubic structure [Cu sulfide (cubic)] is precipitated.

In this embodiment, three temperatures T1°C, T2°C, and T3°C which are described below have important meanings. T1°C is a solid solution temperature of Cu sulfide obtained by calculation, T2°C is a precipitation start temperature of Cu sulfide having the cubic structure obtained by calculation, and T3°C is a lower limit temperature, at which Cu sulfide having the cubic structure is precipitated, obtained by calculation.

$$T1 = 17000 / (14 - \log_{10}([\%Cu]^2 \times [\%S])) - 273 \ \ldots \text{Expression 2}$$

$$T2 = 17000 / (14 - \log_{10}([\%Cu]^2 \times [\%S])) - 323 \ \ldots \text{Expression 3}$$

$$T3 = 17000 / (14 - \log_{10}([\%Cu]^2 \times [\%S])) - 473 \ \ldots \text{Expression 4}$$

Where [%Cu] is the Cu content in terms of mass%, and [%S] is the S content in terms of mass%.

Hereinafter, a method of controlling sulfide on the basis of such temperatures will be described.

First, (A): to allow the total amount of Cu sulfide to be solutionized during the final annealing will be described.

In the non-oriented electrical steel sheet according to this embodiment, the total amount of Cu sulfide can be solutionized by holding the steel sheet at T1°C or higher which is the calculated solid solution temperature of Cu sulfide for 30 seconds or longer. When the holding temperature is lower than T1°C, Cu sulfide cannot be sufficiently solutionized, Cu sulfide having the hexagonal structure or having a crystal lattice damaged by cold rolling remains and has an adverse influence on core loss, which is not preferable. Here, there may be a case where sulfides such as TiS are solutionized and are finely precipitated during cooling such that grain growth in the steel sheet is suppressed and the magnetic flux density and core loss thereof are deteriorated. Therefore, the holding temperature at which Cu sulfide is reliably solutionized and solutionizing of other sulfides is avoided as much as possible is preferably T1 + 30°C or higher and T1 + 200°C or lower, and more preferably T1 + 50°C or higher and T1 + 100°C or lower. Here, when the temperature of the steel sheet becomes higher than its melting point, the steel sheet cannot travel, and thus the upper limit of T1 is 1530°C.

In addition, when the holding time is less than 30 seconds, solutionizing does not sufficiently progress. In order to allow Cu sulfide to be more reliably solutionized, it is preferable that the holding time is 35 seconds or longer. On the other hand, when heating is performed for a long period of time, there is a possibility that other sulfides such as TiS having a low precipitation rate may be generated and the amount of generated Cu sulfide (cubic) which is effective in improving core loss may be reduced. Therefore, the holding temperature (a stay time at T1°C or higher) is preferably 3600 seconds or shorter, and more preferably 300 seconds or shorter.

Next, (B): to reduce the amount of time for staying in a temperature range in which sulfides other than Cu sulfide having the cubic structure are precipitated and increase the amount of time for staying in a temperature range in which Cu sulfide having the cubic structure is precipitated will be described.

In the non-oriented electrical steel sheet according to this embodiment, the effect of improving core loss is obtained by allowing a large amount of Cu sulfide to have the cubic structure which is a stable structure at a low temperature and thus increasing the ratio of Cu sulfide having the cubic structure [Cu sulfide (cubic)] to the total amount of sulfide.

In order to increase the ratio of Cu sulfide (cubic), solid solution S needs to be precipitated as Cu sulfide (cubic) as much as possible. For this, it is important to avoid precipitation of sulfides other than Cu sulfide during cooling as much as possible by rapidly cooling the temperature range of from the solid solution temperature T1°C of Cu sulfide to the precipitation start temperature T2°C of Cu sulfide (cubic) and to allow Cu sulfide (cubic) to be sufficiently precipitated by holding the steel sheet in the precipitation temperature range of Cu sulfide (cubic) between T2°C and T3°C for a certain amount of time.

Specifically, when the average cooling rate from the solid solution temperature T1°C of Cu sulfide to the precipitation start temperature T2°C of Cu sulfide (cubic) is denoted as CR1 (°C/sec) and the average cooling rate from T1°C to the precipitation temperature range of Cu sulfide (cubic) between T2°C and T3°C is denoted as CR2 (°C/sec), the steel sheet is cooled to a temperature of T3°C or lower to satisfy the following Expressions 5 to 7.

$$CR1 > CR2 \ \ldots \text{Expression 5}$$

$$5 \leq CR1 \leq 500 \ \ldots \text{Expression 6}$$

$$0.5 \le CR2 \le 50 \;\ldots\text{Expression 7}$$

The cause of deterioration in core loss is the precipitation of fine FeS, fine MnS, and fine Cu sulfide having the hexagonal structure [fine Cu sulfide (hexagonal)]. These precipitates are precipitated in a temperature range between the solid solution temperature T1°C and the precipitation start temperature T2°C of Cu sulfide (cubic). Therefore, the average cooling rate CR1 from T1 °C to T2°C is set to 5 °C/sec or more. When CR1 is lower than 5 °C/sec, precipitation of fine FeS, fine MnS, and fine Cu sulfide (hexagonal) cannot be sufficiently avoided. In order to further increase core loss, CR1 is preferably higher than 20 °C/sec, more preferably higher than 50 °C/sec, and still more preferably higher than 100 °C/sec.

On the other hand, it is difficult to set CR1 to be higher than 500 °C/sec due to the facilities, and thus the upper limit thereof may be 500 °C/sec. A preferable upper limit of CR1 is 300 °C/sec.

In addition, a large amount of Cu sulfide (cubic) is allowed to be precipitated by holding the steel sheet in the above-described precipitation temperature range of Cu sulfide (cubic) between T2°C and T3°C for a predetermined period of time or longer. Thereby, even when fine FeS, fine MnS, and fine Cu sulfide (hexagonal) are present, the adverse influence thereof can be cancelled out. Since a certain amount of time is needed for the precipitation of Cu sulfide (cubic), it is important to set the average cooling rate CR2 from T2°C to T3°C to be 50 °C/sec or lower. When CR2 is higher than 50 °C/sec, the amount of time for staying in the precipitation temperature range is not sufficient, and the amount of precipitated Cu sulfide (cubic) is not sufficient. In order to ensure a sufficient precipitation amount, CR2 is preferably 20 °C/sec or lower, more preferably 10 °C/sec or lower, and still more preferably 5 °C/sec or less.

On the other hand, when CR2 is lower than 0.5 °C/sec, productivity is degraded, which is not preferable. Therefore, the lower limit of CR2 is 0.5 °C/sec. The lower limit of CR2 is preferably 1 °C/sec.

In addition, when CR1 is lower than CR2, the precipitates mainly contain fine Cu sulfide (hexagonal), fine FeS, and fine MnS having an adverse influence on core loss, which is not preferable.

In the method of manufacturing the non-oriented electrical steel sheet according to this embodiment, from the viewpoint of the holding in the precipitation temperature range of Cu sulfide (cubic), final annealing may be performed two times or more. For example, as described above, the steel sheet may also be subjected to first final annealing at T1°C or higher, be temporarily cooled to T3°C or lower, and thereafter be held in the temperature range between T2°C to T3°C for 30 seconds as second final annealing (additional annealing). By performing the additional annealing, the amount of time that the steel sheet stays at T2°C or lower to T3°C or higher can be increased, and thus good core loss can be obtained. A more preferable temperature range of the additional annealing is T2 - 30°C to T3 + 30°C, and an still more preferable temperature range is T2 - 50°C to T3 + 50°C.

The soaking time (holding time) in the temperature range of T2°C or lower and T3°C or higher is preferably 35 seconds or longer and 3600 seconds or shorter, and is preferably 35 seconds or longer and 300°C or lower.

In addition, in the non-oriented electrical steel sheet according to this embodiment, as described above, it is effective to temporarily dissolve the total amount of Cu precipitates during the final annealing process. In consideration of the state of Cu sulfide before the final annealing, a large amount of Cu sulfide is precipitated during cooling in the hot rolling process. When Cu sulfide is fine Cu sulfide (hexagonal) in a metastable phase, the total amount of Cu sulfide is rapidly solutionized during the final annealing, which is preferable. In order to allow Cu sulfide before the final annealing to be fine Cu sulfide (hexagonal) in a metastable phase, it is preferable that the total amount of Cu sulfide is solutionized by heating the steel sheet to T1°C or higher in the hot-rolled sheet annealing process after the hot rolling process and the steel sheet is cooled at a CR3 of 15 °C/sec or higher when the cooling rate from T1°C to room temperature is denoted as CR3. CR3 is more preferably 30 °C/sec or higher, and still more preferably 60 °C/sec or higher.

Furthermore, the steel sheet is subjected to slow heating at an average temperature rising rate of 100 °C/sec or lower during the final annealing, and thus Cu sulfide is more easily solutionized, which is preferable.

Here, room temperature indicates 23±5°C specified in JIS C 2556.

FIG. 2 is a flowchart showing an example of a process of manufacturing the non-oriented electrical steel sheet according to this embodiment.

In general, as precipitates become coarse, the resistance of magnetic domain wall movement due to the precipitates is reduced and core loss is improved. In addition, as the lattice mismatch between the precipitates and the interface of steel is suppressed, the magnetic domain wall movement becomes smooth and core loss is improved. In the non-oriented electrical steel sheet according to this embodiment, Cu sulfide is transformed so as to have the cubic structure which is a stable crystal system by holding the steel sheet in a predetermined temperature range between T2°C to T3°C described above. The Cu sulfide (cubic) has good consistency with the interface of steel, has a high growth rate, and is thus easily coarsened. As a result, in the non-oriented electrical steel sheet according to this embodiment, it is thought that the magnetic domain wall movement becomes easy and good core loss is exhibited.

[Examples]

<Example 1>

An ingot having the components shown in Table 1 was melted in vacuum, and the ingot was heated to 1150°C and was hot rolled at a hot rolling finish temperature of 875°C and a coiling temperature of 630°C, thereby producing a hot-rolled steel sheet having a sheet thickness of 2.0 mm. The hot-rolled steel sheet was subjected to hot-rolled sheet annealing, was subjected to pickling, and was cold-rolled at a rolling reduction of 75%, thereby producing a cold-rolled steel sheet having a sheet thickness of 0.50 mm. Heat treatments performed on the test materials and the precipitation states of observed precipitates are shown in Table 2, and the magnetic properties (magnetic flux density and core loss) of each of the obtained steel sheets are shown in Table 3. Evaluation results of core loss evaluated as VG for very good, G for good, F for effective, and B for level in the related art are also shown in Table 3.

In addition, the evaluation of magnetic properties was performed on the basis of JIS C 2550:2000. Regarding core loss, W15/50 (W/kg) was evaluated. W15/50 is a core loss at a frequency of 50 Hz and at a maximum magnetic flux density of 1.5T. In addition, the magnetic flux density was evaluated by using B50. B50 indicates a magnetic flux density at a magnetic field strength of 5000 A/m. In addition, the minimum target value of B50 was set to 1.65 T as in the related art.

The core loss evaluation criteria of the samples are as follows.

VG (Very Good): W15/50 (W/kg) < 2.28
G (Good): 2.28 ≤ W15/50 (W/kg) < 2.36
F (Fair): 2.36 ≤ W15/50 (W/kg) <2.50
B (Bad): 2.50 ≤ W15/50 (W/kg)

Samples of which the magnetic properties could not be measured due to hot rolling breaking or cold rolling breaking were also evaluated as B (Bad).

In addition, for X-ray diffraction, only inclusions which were collected with a filter by a general extraction residue method described in Non-Patent Documents 4 and 5 were used as analysis samples. XRD measurement was performed by wide angle X-ray diffraction using Cu-Kα rays described in Non-Patent Documents 4 and 6 as a probe.

In addition, for precipitate observation, a surface perpendicular to the rolling direction of the steel sheet was etched and measured through SEM observation. At this time, after ten visual fields of 100 $\mu m^2$ were observed, the surface was polished by about 20 $\mu m$, and then ten visual fields of 100 $\mu m^2$ were observed. This was repeated five times.

[Table 1]

| STEEL TYPE | C | Si | Mn | P | S | Al | Cu | N | T1(°C) | T2(°C) | T3(°C) |
|---|---|---|---|---|---|---|---|---|---|---|---|
| | | | | | | | | | (mass%) | | |
| A | 0.0024 | 3.11 | 0.03 | 0.016 | 0.017 | 0.51 | 1.131 | 0.0026 | 812.4 | 762.4 | 612.4 |
| B | 0.0024 | 3.11 | 0.03 | 0.016 | 0.020 | 0.51 | 0.045 | 0.0026 | 651.3 | 601.3 | 451.3 |
| C | 0.0024 | 3.11 | 1.15 | 0.016 | 0.021 | 0.51 | 0.095 | 0.0026 | 686.2 | 636.2 | 486.2 |
| D | 0.0024 | 3.11 | 0.03 | 0.016 | 0.003 | 0.51 | 0.008 | 0.0026 | 547.6 | 497.6 | 347.6 |
| E | 0.0030 | 2.53 | 0.33 | 0.0011 | 0.009 | 1.01 | 0.65 | 0.0033 | 762.3 | 712.3 | 562.3 |
| F | 0.0019 | 1.51 | 0.05 | 0.015 | 0.015 | 0.67 | 0.78 | 0.0070 | 786.9 | 736.9 | 586.9 |
| G | 0.0012 | 0.52 | 0.85 | 0.002 | 0.008 | 0.006 | 0.56 | 0.0035 | 751.1 | 701.1 | 551.1 |

COMPONENTS WHICH ARE OUTSIDE OF SPECIFIED RANGES ARE UNDERLINED.
REMAINDER INCLUDES Fe AND IMPURITIES.

[Table 2]

| MANUFACTURE NO. | STEEL TYPE | [%Cu]/[%S] | FIRST FINAL ANNEALING | | AVERAGE COOLING RATE AFTER FINAL ANNEALING | | | SECOND FINAL ANNEALING | | HOT-ROLLED SHEET ANNEALING | | COOLING RATE AFTER HOT-ROLLED SHEET ANNEALING | $I_{2\theta}=46.4/I_{2\theta}=32.3$ | NUMBER DENSITY |
|---|---|---|---|---|---|---|---|---|---|---|---|---|---|---|
| | | | HOLDING TEMPERATURE (°C) | HOLDING TIME (SEC) | CR1 (°C/SEC) | CR2 (°C/SEC) | CR1>CR2 | HOLDING TEMPERATURE (°C) | HOLDING TIME (SEC) | HOLDING TEMPERATURE (°C) | HOLDING TIME (SEC) | CR3 (°C/SEC) | | (PIECES/μm³) |
| 1 | A | 66.5 | 1000 | 30 | 24 | 5 | OK | – | – | 1050 | 30 | 10 | 0.25 | 1.13 |
| 2 | B | 2.3 | 1000 | 30 | 24 | 5 | OK | – | – | 1050 | 30 | 10 | 0.41 | 0.75 |
| 3 | A | 66.5 | 1000 | 30 | 10 | 5 | OK | – | – | 1050 | 30 | 10 | 0.20 | 1.03 |
| 4 | C | 4.5 | 1000 | 30 | 10 | 5 | OK | – | – | 1050 | 30 | 10 | 0.24 | 1.11 |
| 5 | A | 66.5 | 1000 | 30 | 24 | 22 | OK | – | – | 1050 | 30 | 10 | 0.25 | 0.88 |
| 6 | A | 66.5 | 1000 | 30 | 24 | 22 | OK | 700 | 60 | 1050 | 30 | 20 | 0.20 | 1.12 |
| 7 | A | 66.5 | 1000 | 30 | 52 | 5 | OK | 700 | 60 | 1050 | 30 | 18 | 0.17 | 0.95 |
| 8 | A | 66.5 | 1000 | 30 | 105 | 5 | OK | 700 | 60 | 1050 | 30 | 23 | 0.15 | 0.72 |
| 9 | A | 66.5 | 1000 | 30 | 10 | 25 | NG | – | – | 1050 | 30 | 10 | 0.87 | 0.33 |
| 10 | A | 66.5 | 1000 | 30 | 10 | 25 | NG | 700 | 60 | 1050 | 30 | 10 | 0.67 | 0.30 |
| 11 | A | 66.5 | 1000 | 30 | 10 | 25 | NG | – | – | 1050 | 30 | 20 | 0.56 | 0.44 |
| 12 | D | 2.7 | 1000 | 30 | 24 | 5 | OK | 400 | 120 | 1050 | 30 | 20 | 1.33 | 0.24 |
| 13 | E | 72.2 | 950 | 30 | 24 | 5 | OK | – | – | 1000 | 30 | 10 | 0.23 | 1.02 |
| 14 | E | 72.2 | 950 | 30 | 10 | 25 | NG | – | – | 1000 | 30 | 10 | 0.80 | 0.48 |
| 15 | F | 52.0 | 850 | 30 | 24 | 5 | OK | – | – | 950 | 30 | 10 | 0.23 | 1.16 |
| 16 | F | 52.0 | 850 | 30 | 10 | 25 | NG | – | – | 950 | 30 | 10 | 0.73 | 0.33 |
| 17 | G | 70.0 | 820 | 30 | 24 | 5 | OK | – | – | – | – | – | 0.26 | 1.19 |
| 18 | G | 70.0 | 820 | 30 | 10 | 25 | NG | – | – | – | – | – | 0.97 | 0.33 |

ITEMS WHICH ARE OUTSIDE OF SPECIFIED RANGES ARE UNDERLINED.

[Table 3]

| MANUFACTURE NO. | MAGNETIC FLUX DENSITY B50(T) | CORE LOSS W15/50 (W/kg) | EVALUATION | NOTE |
|---|---|---|---|---|
| 1 | 1.70 | 2.25 | VG | INVENTION STEEL |
| 2 | 1.67 | 2.38 | F | INVENTION STEEL |
| 3 | 1.69 | 2.29 | G | INVENTION STEEL |
| 4 | 1.71 | 2.24 | VG | INVENTION STEEL |
| 5 | 1.68 | 2.31 | G | INVENTION STEEL |
| 6 | 1.71 | 2.26 | VG | INVENTION STEEL |
| 7 | 1.70 | 2.22 | VG | INVENTION STEEL |
| 8 | 1.70 | 2.20 | VG | INVENTION STEEL |
| 9 | 1.63 | 2.67 | B | COMPARATIVE STEEL |
| 10 | 1.65 | 2.67 | B | COMPARATIVE STEEL |
| 11 | 1.64 | 2.67 | B | COMPARATIVE STEEL |
| 12 | 1.61 | 2.99 | B | COMPARATIVE STEEL |
| 13 | 1.71 | 2.34 | VG | INVENTION STEEL |
| 14 | 1.69 | 2.92 | B | COMPARATIVE STEEL |
| 15 | 1.73 | 2.47 | F | INVENTION STEEL |
| 16 | 1.70 | 3.18 | B | COMPARATIVE STEEL |
| 17 | 1.79 | 2.49 | F | INVENTION STEEL |
| 18 | 1.77 | 4.83 | B | COMPARATIVE STEEL |

<Example 2>

An ingot having the chemical components shown in Table 4 was melted in vacuum, and the ingot was heated to 1150°C and was hot rolled at a hot rolling finish temperature of 850°C, thereby producing a hot-rolled steel sheet having a sheet thickness of 2.3 mm. The hot-rolled steel sheet was subjected to hot-rolled sheet annealing, was subjected to pickling, and was cold-rolled at a rolling reduction of 85%, thereby producing a cold-rolled steel sheet having a sheet thickness of 0.5 mm. Thereafter, final annealing was performed at a holding temperature of T1 + 50°C for a holding time of 45 seconds. Thereafter, furnace cooling was performed so that the average cooling rates between T1°C and T2°C and between T2°C and T3°C were respectively 35 °C/sec and 15 °C/sec. X-ray diffraction results, the precipitation states of precipitates, magnetic properties (magnetic flux density and core loss), brittleness, and overall evaluation results are shown in Table 5.

Regarding X-ray diffraction, measurement of the magnetic properties, and measurement of the precipitates, the same evaluations as in Example 1 were performed. Furthermore, in this example, a repeat bending test was performed on the basis of JIS C 2550:2000 to evaluate workability. In a case where breaking occurs with one time of bending, working properties were insufficient and were evaluated as fail, and a level at which breaking had not occurred after two times of bending was evaluated as pass (PASS).

In addition, in a case where a sample was broken during the repeat bending test, the sample was evaluated as B regardless of core loss, and the evaluation of core loss was performed only on samples which passed the repeat bending test. In addition, regarding the samples which could not be subjected to the repeat bending test due to breaking during rolling or the like, the test results thereof are indicated by "-".

[Table 4]

| STEEL TYPE | C | Si | Mn | P | S | Al | Cu | N | T1 | T2 | T3 |
|---|---|---|---|---|---|---|---|---|---|---|---|
| | | | | | | (mass%) | | | | | (°C) |
| H1 | 0.0002 | 2.89 | 0.03 | 0.003 | 0.004 | 0.049 | 0.09 | 0.0034 | 647 | 597 | 447 |
| H2 | 0.0002 | 2.88 | 0.04 | 0.002 | 0.061 | 0.047 | 0.12 | 0.0033 | 724 | 674 | 524 |
| H3 | 0.009 | 2.88 | 0.02 | 0.004 | 0.022 | 0.043 | 0.07 | 0.0082 | 674 | 624 | 474 |
| H4 | 0.0008 | 1 .32 | 0.04 | 0.063 | 0.007 | 0.06 | 0.08 | 0.0059 | 654 | 604 | 454 |
| H5 | 0.0017 | 6.98 | 0.04 | 0.0034 | 0.0091 | 0.082 | 0.03 | 0.0023 | 620 | 570 | 420 |
| H6 | 0.0018 | 2.86 | 0.01 | 0.116 | 0.0075 | 0.076 | 0.08 | 0.0026 | 657 | 607 | 457 |
| H7 | 0.0018 | 3.32 | 2.99 | 0.123 | 0.0062 | 0.053 | 0.08 | 0.0074 | 649 | 599 | 449 |
| H8 | 0.0016 | 3.31 | 0.01 | 0.113 | 0.0063 | 0.051 | 0.08 | 0.0023 | 650 | 600 | 450 |
| H9 | 0.0017 | 3.29 | 2.97 | 0.12 | 0.0059 | 0.055 | 0.07 | 0.0022 | 645 | 595 | 445 |
| H10 | 0.0017 | 2.85 | 0.05 | 0.0012 | 0.0072 | 0.034 | 0.04 | 0.0037 | 627 | 577 | 427 |
| H11 | 0.0016 | 3.31 | 0.09 | 0.148 | 0.009 | 1.24 | 0.05 | 0.0026 | 642 | 592 | 442 |
| H12 | 0.0018 | 2.87 | 0.02 | 0.003 | 0.0002 | 0.053 | 0.06 | 0.0026 | 568 | 518 | 368 |
| H13 | 0.0004 | 2.85 | 0.02 | 0.134 | 0.098 | 0.041 | 1.33 | 0.0082 | 879 | 829 | 679 |
| H14 | 0.0016 | 2.98 | 0.04 | 0.129 | 0.041 | 0.0021 | 1.11 | 0.0028 | 838 | 788 | 638 |
| H15 | 0.0016 | 3.32 | 0.55 | 0.0029 | 0.0074 | 2.99 | 0.06 | 0.0019 | 642 | 592 | 442 |
| H16 | 0.0004 | 3.33 | 0.03 | 0.074 | 0.0021 | 0.034 | 0.01 | 0.0021 | 549 | 499 | 349 |
| H17 | 0.0016 | 2.89 | 0.02 | 0.121 | 0.0081 | 0.066 | 4.91 | 0.0025 | 883 | 833 | 683 |
| H18 | 0.0014 | 2.88 | 0.02 | 0.121 | 0.091 | 0.068 | 4.9 | 0.0027 | 971 | 921 | 771 |
| H19 | 0.0016 | 2.89 | 0.02 | 0.116 | 0.0003 | 0.071 | 0.01 | 0.0023 | 517 | 467 | 317 |
| H20 | 0.0017 | 3.11 | 0.02 | 0.0042 | 0.0079 | 1.73 | 0.03 | 0.0011 | 615 | 565 | 415 |
| H21 | 0.0016 | 2.87 | 0.02 | 0.126 | 0.0081 | 0.049 | 0.06 | 0.0098 | 644 | 594 | 444 |
| H22 | 0.0006 | 3.22 | 1.24 | 0.08 | 0.018 | 0.78 | 0.73 | 0.0044 | 788 | 738 | 588 |
| H23 | 0.0009 | 3.12 | 0.35 | 0.03 | 0.021 | 1.13 | 1.18 | 0.0062 | 821 | 771 | 621 |
| h1 | <0.0001 | 3.01 | 0.05 | 0.12 | 0.005 | 0.045 | 0.12 | 0.0055 | 664 | 614 | 464 |
| h2 | 0.022 | 3.16 | 0.03 | 0.005 | 0.017 | 0.0027 | 0.17 | 0.0073 | 709 | 659 | 509 |
| h3 | 0.0012 | 0.047 | 0.03 | 0.002 | 0.019 | 0.077 | 0.23 | 0.0012 | 727 | 677 | 527 |
| h4 | 0.0016 | 7.11 | 0.03 | 0.123 | 0.012 | 0.021 | 0.06 | 0.0021 | 653 | 603 | 453 |
| h5 | 0.0017 | 3.32 | 0.007 | 0.11 | 0.018 | 0.034 | 0.12 | 0.0026 | 694 | 644 | 494 |
| h6 | 0.0013 | 3.21 | 3.03 | 0.12 | 0.017 | 0.056 | 0.16 | 0.0034 | 706 | 656 | 506 |
| h7 | 0.0014 | 3.44 | 0.03 | 0.0008 | 0.019 | 0.075 | 2.12 | 0.0026 | 855 | 805 | 655 |
| h8 | 0.0014 | 3.18 | 0.03 | 0.151 | 0.016 | 0.045 | 1.97 | 0.0022 | 845 | 795 | 645 |
| h9 | 0.0016 | 3.09 | 0.04 | 0.118 | <0.0001 | 0.098 | 0.84 | 0.0045 | 664 | 614 | 464 |
| h10 | 0.0013 | 3.11 | 0.03 | 0.127 | 0.123 | 0.043 | 2.56 | 0.0026 | 933 | 883 | 733 |
| h11 | 0.0016 | 3.27 | 0.06 | 0.106 | 0.012 | 0.0019 | 2.12 | 0.0019 | 840 | 790 | 640 |
| H12 | 0.0016 | 3.23 | 0.02 | 0.129 | 0.011 | 3.15 | 1.15 | 0.0026 | 800 | 750 | 600 |

(continued)

| STEEL TYPE | C | Si | Mn | P | S | Al | Cu | N | T1 | T2 | T3 |
|---|---|---|---|---|---|---|---|---|---|---|---|
| | | | | | | | | (mass%) | | | (°C) |
| h13 | 0.0013 | 3.21 | 0.04 | 0.104 | 0.002 | 0.021 | 0.007 | 0.0077 | 536 | 486 | 336 |
| h14 | 0.0016 | 2.91 | 0.05 | 0.098 | 0.012 | 0.022 | 5.11 | 0.0029 | 899 | 849 | 699 |
| h15 | 0.001 | 3.01 | 0.03 | 0.111 | 0.014 | 0.056 | 0.55 | 0.0006 | 765 | 715 | 565 |
| h16 | 0.0015 | 3.12 | 0.04 | 0.138 | 0.012 | 0.017 | 0.78 | 0.011 | 781 | 731 | 581 |

REMAINDER INCLUDES Fe AND IMPURITIES.
COMPONENTS WHICH ARE OUTSIDE OF SPECIFIED RANGES ARE UNDERLINED.

[Table 5]

| MANUFACTURE NO. | STEEL TYPE | $I_{2\theta=46.4}/I_{2\theta=32.3}$ | $[\%Cu]/[\%S]$ | NUMBER DENSITY (PIECES/$\mu$m³) | $I_{2\theta=32.3}/I_{2\theta=34.3}$ | CORE LOSS W15/50(W/kg) | MAGNETIC FLUX DENSITY B50(T) | WORKABILITY REPEAT BENDING TEST | EVALUATION | NOTE |
|---|---|---|---|---|---|---|---|---|---|---|
| 201 | H1 | 0.44 | 23 | 1.67 | 7.21 | 2.40 | 1.69 | PASS | F | INVENTION STEEL |
| 202 | H2 | 0.48 | 2 | 1.56 | 6.84 | 2.49 | 1.69 | PASS | F | |
| 203 | H3 | 0.36 | 3 | 2.34 | 5.64 | 2.32 | 1.68 | PASS | G | |
| 204 | H4 | 0.09 | 12 | 0.52 | 8.11 | 2.07 | 1.72 | PASS | VG | |
| 205 | H5 | 0.45 | 4 | 3.18 | 7.88 | 2.40 | 1.65 | PASS | F | |
| 206 | H6 | 0.47 | 11 | 1.12 | 8.10 | 2.33 | 1.67 | PASS | G | |
| 207 | H7 | 0.31 | 12 | 1.20 | 0.01 | 2.17 | 1.68 | PASS | VG | |
| 208 | H8 | 0.33 | 12 | 1.18 | 12.34 | 2.41 | 1.69 | PASS | F | |
| 209 | H9 | 0.33 | 12 | 1.21 | <0.001 | 2.42 | 1.70 | PASS | F | |
| 210 | H10 | 0.34 | 6 | 1.55 | 7.21 | 2.32 | 1.68 | PASS | G | |
| 211 | H11 | 0.29 | 6 | 1.98 | 0.01 | 2.25 | 1.69 | PASS | VG | |
| 212 | H12 | 0.18 | 280 | 0.88 | 8.34 | 2.28 | 1.69 | PASS | G | |
| 213 | H13 | 0.38 | 14 | 9.48 | 6.11 | 2.36 | 1.70 | PASS | F | |
| 214 | H14 | 0.09 | 27 | 0.67 | 7.12 | 2.11 | 1.71 | PASS | VG | |
| 215 | H15 | 0.17 | 8 | 0.92 | 0.01 | 2.17 | 1.68 | PASS | F | |
| 216 | H16 | 0.39 | 5 | 3.27 | 8.96 | 2.37 | 1.66 | PASS | F | |
| 217 | H17 | 0.43 | 606 | 41.30 | 5.79 | 2.36 | 1.67 | PASS | F | |
| 218 | H18 | 0.43 | 606 | 51.70 | 7.99 | 2.46 | 1.67 | PASS | F | |
| 219 | H19 | 0.43 | 606 | 0.41 | 6.45 | 2.47 | 1.71 | PASS | VG | |
| 220 | H20 | 0.28 | 4 | 1.10 | 6.33 | 2.25 | 1.66 | PASS | F | |
| 221 | H21 | 0.43 | 8 | 1.21 | 7.11 | 2.40 | 1.68 | PASS | VG | |
| 222 | H22 | 0.19 | 41 | 0.86 | 1.81 | 1.99 | 1.70 | PASS | VG | |
| 223 | H23 | 0.05 | 56 | 0.69 | 0.07 | 1.92 | 1.70 | PASS | VG | |
| 224 | h1 | 0.43 | 24 | 1.10 | 8.11 | 2.68 | 1.54 | PASS | B | COMPARATIVE STEEL |
| 225 | h2 | 0.33 | 10 | 2.13 | 9.45 | 2.76 | 1.68 | PASS | B | |
| 226 | h3 | 0.39 | 12 | 1.06 | 8.31 | 3.11 | 1.73 | — | B | |
| 227 | h4 | — | 5 | — | — | — | — | — | B | |
| 228 | h5 | — | 7 | — | <0.001 | — | 1.68 | PASS | B | |
| 229 | h6 | 2.10 | 9 | 14.40 | 8.01 | 2.65 | 1.50 | PASS | B | |
| 230 | h7 | 0.33 | 112 | 0.91 | 7.78 | 2.77 | 1.55 | PASS | B | |
| 231 | h8 | 0.17 | 123 | 1.23 | 6.64 | 2.73 | 1.66 | PASS | B | |
| 232 | h9 | 1.80 | >5200 | 0.67 | — | 2.69 | 1.52 | PASS | B | |
| 233 | h10 | — | 21 | — | 8.12 | 2.71 | 1.69 | FRACTURE AT ONE TIME | B | |
| 234 | h11 | 0.32 | 177 | 1.20 | 8.91 | 2.41 | 1.64 | PASS | B | |
| 235 | h12 | 0.46 | 105 | 0.77 | 5.42 | 2.67 | 1.67 | FRACTURE AT ONE TIME | B | |
| 236 | h13 | 12.20 | 4 | 0.31 | 5.63 | 2.46 | 1.48 | PASS | B | |
| 237 | h14 | 0.40 | 426 | 17.30 | 7.47 | 2.65 | 1.51 | PASS | B | |
| 238 | h15 | 0.25 | 39 | 1.10 | 8.34 | 2.72 | | PASS | B | |
| 239 | h16 | 0.35 | 65 | 0.78 | | | | | B | |

14

<Example 3>

An ingot having the same components as Steel type No. H23 shown in Table 4 was heated to 1100°C and was hot-rolled at a finish temperature of 850°C and a coiling temperature of 630°C, thereby producing a hot-rolled sheet having a sheet thickness of 2.0 mm. The hot-rolled sheet was subjected to final annealing under the conditions shown in Table 5, and was subjected to hot-rolled sheet annealing at 1000°C for 120 seconds in some examples. Other manufacturing conditions, X-ray diffraction results, the precipitation states of precipitates, and the evaluation results of magnetic properties (magnetic flux density and core loss) are shown in Table 6. Regarding X-ray diffraction, measurement of the magnetic properties, and measurement of the precipitates, the same evaluations as in Example 1 were performed.

[Table 6]

| NOTE | MANUFACTURE NO. | STEEL TYPE | CALCURATED TEMPERATURE T1 (°C) | T2 (°C) | T3 (°C) | FIRST FINAL ANNEALING HOLDING TEMPERATURE (°C) | HOLDING TIME (SEC) | AVERAGE COOLING RATE AFTER FINAL ANNEALING CR1 (°C/SEC) | CR2 (°C/SEC) | CR1>CR2 | SECOND FINAL ANNEALING HOLDING TEMPERATURE (°C) | HOLDING TIME (SEC) | COOLING RATE AFTER HOT-ROLLED SHEET ANNEALING CR3 (°C/SEC) | $I_{2\theta=46.4}/I_{2\theta=32.3}$ | NUMBER DENSITY (PIECES/$\mu m^3$) | MAGNETIC PROPERTY CORE LOSS W15/50(W/kg) | MAGNETIC FLUX DENSITY B50(T) | EVALUATION |
|---|---|---|---|---|---|---|---|---|---|---|---|---|---|---|---|---|---|---|
| INVENTION STEEL | 23A | H23 | 821 | 771 | 621 | 822 | 33 | 34 | 17 | OK | — | — | — | 0.48 | 2.12 | 2.38 | 1.68 | F |
| | 23B | H23 | 821 | 771 | 621 | 843 | 31 | 35 | 15 | OK | — | — | — | 0.49 | 1.91 | 2.39 | 1.69 | F |
| | 23C | H23 | 821 | 771 | 621 | 845 | 34 | 21 | 17 | OK | — | — | — | 0.45 | 1.88 | 2.37 | 1.67 | F |
| | 23D | H23 | 821 | 771 | 621 | 841 | 32 | 42 | 19 | OK | — | — | — | 0.47 | 1.72 | 2.38 | 1.68 | F |
| | 23E | H23 | 821 | 771 | 621 | 839 | 33 | 38 | 16 | OK | — | — | — | 0.38 | 1.66 | 2.36 | 1.69 | F |
| | 23F | H23 | 821 | 771 | 621 | 841 | 32 | 45 | 7 | OK | 622 | 33 | 43 | 0.36 | 1.34 | 2.35 | 1.68 | G |
| | 23G | H23 | 821 | 771 | 621 | 856 | 34 | 41 | 12 | OK | 769 | 34 | — | 0.15 | 0.80 | 2.25 | 1.70 | VG |
| | 23H | H23 | 821 | 771 | 621 | 832 | 33 | 39 | 2 | OK | 753 | 31 | 16 | 0.31 | 1.12 | 2.31 | 1.69 | G |
| | 23I | H23 | 821 | 771 | 621 | 912 | 32 | 34 | 16 | OK | — | — | 16 | 0.33 | 1.55 | 2.29 | 1.67 | G |
| | 23J | H23 | 821 | 771 | 621 | 843 | 33 | 29 | 14 | OK | 730 | 32 | 21 | 0.33 | 1.23 | 2.35 | 1.69 | G |
| | 23K | H23 | 821 | 771 | 621 | 835 | 3490 | 40 | 15 | OK | 634 | 310 | — | 0.06 | 0.66 | 2.24 | 1.69 | VG |
| | 23L | H23 | 821 | 771 | 621 | 832 | 38 | 39 | 17 | OK | — | — | — | 0.30 | 1.32 | 2.29 | 1.67 | G |
| | 23M | H23 | 821 | 771 | 621 | 844 | 34 | 93 | 15 | OK | 696 | 38 | 61 | 0.19 | 0.83 | 2.12 | 1.70 | VG |
| | 23N | H23 | 821 | 771 | 621 | 846 | 34 | 298 | 17 | OK | — | — | — | 0.14 | 0.85 | 2.22 | 1.69 | VG |
| | 23O | H23 | 821 | 771 | 621 | 1052 | 406 | 52 | 8 | OK | 669 | 3540 | 32 | 0.13 | 0.88 | 2.04 | 1.71 | VG |
| | 23P | H23 | 821 | 771 | 621 | 997 | 118 | 112 | 3 | OK | 711 | 129 | 71 | 0.07 | 0.67 | 1.93 | 1.69 | VG |
| COMPARATIVE STEEL | 23a | H23 | 821 | 771 | 621 | 919 | 120 | 185 | 4 | OK | 687 | 45 | 64 | 0.89 | 1.86 | 2.58 | 1.68 | B |
| | 23b | H23 | 821 | 771 | 621 | 885 | 29 | 302 | 2 | OK | 701 | 45 | 67 | 1.21 | 2.14 | 2.57 | 1.69 | B |
| | 23c | H23 | 821 | 771 | 621 | 876 | 120 | 17 | 33 | NG | 717 | 45 | 68 | 0.76 | 2.20 | 2.53 | 1.67 | B |
| | 23d | H23 | 821 | 771 | 621 | 855 | 120 | 3 | 2 | OK | 750 | 40 | 63 | 0.77 | 2.17 | 2.51 | 1.68 | B |
| | 23e | H23 | 821 | 771 | 621 | 861 | 120 | 98 | 53 | OK | 750 | 40 | 63 | 0.69 | 1.54 | 2.52 | 1.69 | B |
| | 23f | H23 | 821 | 771 | 621 | 855 | 120 | 2 | 31 | NG | 720 | 40 | 62 | 0.71 | 1.81 | 2.55 | 1.68 | B |
| | 23g | H23 | 821 | 771 | 621 | 861 | 120 | 16 | 52 | NG | 750 | 40 | 64 | 0.68 | 1.93 | 2.56 | 1.69 | B |

According to Examples 1 to 3 described above, in a case where the chemical components and the manufacturing method were preferable as in Manufacture Nos. 1 to 8, 12, 13, 15, 17, 201 to 223, and 23A to 23P, it was seen that the ratio of Cu sulfide (cubic) satisfied the present invention and thus a non-oriented electrical steel sheet having excellent core loss could be obtained. On the other hand, in a case where any of the chemical components and the manufacturing method were outside of the range of the present invention, sufficient core loss could not be obtained, and thus basic properties required of the non-oriented electrical steel sheet could not be obtained. Otherwise, as in Manufacture Nos. 227, 228, and 233, breaking had occurred during rolling, and magnetic properties, XRD (X-ray diffraction), and number densities could not be evaluated.

[Industrial Applicability]

According to the present invention, even when high purification, a reduction in slab heating temperature, optimization of hot rolling conditions, and the like are not performed on the non-oriented electrical steel sheet, it is possible to make fine Cu sulfide harmless. Accordingly, a non-oriented electrical steel sheet having excellent core loss can be provided.

**Claims**

1.  A non-oriented electrical steel sheet comprising chemical compositions consisting of, in terms of mass%:

    C: 0.0001% to 0.01%;
    Si: 0.05% to 7.0%;
    Mn: 0.01% to 3.0%;
    Al: 0.0020% to 3.0%;
    S: 0.0001% to 0.1%;
    P: 0.0010% to 0.15%;
    N: 0.0010% to 0.01%;
    Cu: 0.01% to 5.0%; and
    optionally Mo, W, In, Sn, Bi, Sb, Ag, Te, Ce, V, Cr, Co, Ni, Se, Re, Os, Nb, Zr, Hf, and Ta in a range of 0.5% or less in total; and
    optionally Mg, Ca, Zn, and Ti, wherein the sum of the amounts of Mg, Ca, Zn, and Ti is 0.2% or less; and
    a remainder including Fe and impurities,
    wherein $I_{2\theta=46.4}$ which is a diffraction intensity of Cu sulfide having a hexagonal structure shown at $2\theta=46.4°$ and $I_{2\theta=32.3}$ which is a diffraction intensity of Cu sulfide having a cubic structure shown at $2\theta=32.3°$, which are obtained through a X-ray diffraction of an electrolytic extraction residue, satisfy the following Expression 1:

    $$I_{2\theta=46.4} \, / \, I_{2\theta=32.3} \leq 0.5 \ldots \text{Expression 1.}$$

2.  The non-oriented electrical steel sheet according to claim 1,
    wherein, when a Cu content, in terms of mass%, is denoted as [%Cu] and an S content, in terms of mass%, is denoted as [%S], the [%Cu] and the [%S] satisfy [%Cu] / [%S] $\geq$ 2.5.

3.  The non-oriented electrical steel sheet according to claim 1 or 2,
    wherein 0.5 pieces/$\mu m^3$ to 50 pieces/$\mu m^3$ of sulfide containing Cu and having a diameter of 5 nm to 500 nm are contained.

4.  A method of manufacturing the non-oriented electrical steel sheet according to any one of claims 1 to 3, the method comprising:

    performing a hot rolling on a slab to obtain a hot-rolled steel sheet;
    annealing the hot-rolled steel sheet;
    pickling the hot-rolled steel sheet;
    performing a cold rolling on the hot-rolled steel sheet to obtain a cold-rolled steel sheet; and
    annealing the cold-rolled steel sheet,
    wherein, in the annealing of the cold-rolled steel sheet, after the cold-rolled steel sheet is held at T1°C, which is represented in the following Expression 2, to 1530°C for 30 seconds to 3600 seconds, when an average cooling rate from the T1°C to T2°C, which is shown in Expression 3, is denoted as CR1 in the unit of °C/sec and an average cooling rate from the T2°C to T3°C, which is shown in Expression 4, is denoted as CR2 in the unit of °C/sec, the cold-rolled steel sheet is cooled to a temperature range of the T3°C or lower so that the CR1 and the CR2 satisfy Expressions 5, 6 and 7:

$$T1 = 17000 \, / \, (14 - \log_{10}([\%Cu]^2 \times [\%S])) - 273 \, \ldots\text{Expression 2}$$

$$T2 = 17000 \, / \, (14 - \log_{10}([\%Cu]^2 \times [\%S])) - 323 \, \ldots\text{Expression 3}$$

$$T3 = 17000 \, / \, (14 - \log_{10}([\%Cu]^2 \times [\%S])) - 473 \, \ldots\text{Expression 4}$$

$$CR1 > CR2 \, \ldots\text{Expression 5}$$

$$5 \leq CR1 \leq 500 \, \ldots\text{Expression 6}$$

$$0.5 \leq CR2 \leq 50 \, \ldots\text{Expression 7}$$

where [%Cu] is a Cu content in terms of mass% and [%S] is an S content in terms of mass%.

5. The method of manufacturing a non-oriented electrical steel sheet according to claim 4, wherein the CR1 further satisfies the following Expression 8:

$$CR1 > 20 \, \ldots\text{Expression 8.}$$

6. The method of manufacturing a non-oriented electrical steel sheet according to claim 4 or 5, wherein the CR2 further satisfies the following Expression 9:

$$CR2 \leq 20 \, \ldots\text{Expression 9.}$$

7. The method of manufacturing a non-oriented electrical steel sheet according to any one of claims 4 to 6, further comprising:
   subsequent to the annealing of the cold-rolled steel sheet, holding the cold-rolled steel sheet in a temperature range of the T2°C or lower to the T3°C or higher for 30 seconds or longer as an additional annealing.

8. The method of manufacturing a non-oriented electrical steel sheet according to any one of claims 4 to 7, wherein, in the annealing of the hot-rolled steel sheet, the hot-rolled steel sheet is cooled so that CR3 which is an average cooling rate from the T1°C to a room temperature is 15 °C/sec or higher.

**Patentansprüche**

1. Ein nichtorientiertes Elektrostahlblech, umfassend chemische Zusammensetzungen bestehend aus, ausgedrückt in Massen%:

   C: 0,0001% bis 0,01%;
   Si: 0,05% bis 7,0%;
   Mn: 0,01% bis 3,0%;
   Al: 0,0020% bis 3,0%;
   S: 0,0001% bis 0,1%;
   P: 0,0010% bis 0,15%;

N: 0,0010% bis 0,01%;

Cu: 0,01% bis 5,0%; und

gegebenenfalls Mo, W, In, Sn, Bi, Sb, Ag, Te, Ce, V, Cr, Co, Ni, Se, Re, Os, Nb, Zr, Hf und Ta in einem Bereich von insgesamt 0,5% oder weniger; und

gegebenenfalls Mg, Ca, Zn und Ti, wobei die Summe der Mengen an Mg, Ca, Zn und Ti 0,2% oder weniger beträgt; und

einem Rest, der Fe und Verunreinigungen enthält,

wobei $I_{2\theta=46,4}$, welche eine Beugungsintensität von Cu-Sulfid mit einer hexagonalen Struktur, die bei $2\theta=46,4°$ angezeigt wird, ist und $I_{2\theta=32,3}$, welche eine Beugungsintensität von Cu-Sulfid mit einer kubischen Struktur, die bei $2\theta=32,3°$ anzeigt wird, ist, die durch eine Röntgenbeugung eines elektrolytischen Extraktionsrückstands erhalten werden, den nachstehenden Ausdruck 1 erfüllen:

$$I_{2\theta=46,4} \, / \, I_{2\theta=32,3} \leq 0,5 \ldots \text{Ausdruck 1.}$$

2. Das nichtorientierte Elektrostahlblech nach Anspruch 1,
wobei, wenn ein Cu-Gehalt, ausgedrückt in Massen%, als [%Cu] bezeichnet wird und ein S-Gehalt, ausgedrückt in Massen% als [%S] bezeichnet wird, [%Cu] und [%S] [%Cu] / [%S] $\geq$ 2,5 erfüllen.

3. Das nichtorientierte Elektrostahlblech nach Anspruch 1 oder 2,
wobei 0,5 Teilchen/$\mu m^3$ bis 50 Teilchen/$\mu m^3$ von Sulfid, das Cu enthält, und einen Durchmesser von 5 nm bis 500 nm aufweist, enthalten sind.

4. Ein Verfahren zur Herstellung des nichtorientierten Elektrostahlblechs nach einem der Ansprüche 1 bis 3, wobei das Verfahren umfasst:

Durchführen eines Warmwalzens auf einer Bramme, um ein warmgewalztes Stahlblech zu erhalten;
Glühen des warmgewalzten Stahlblechs;
Beizen des warmgewalzten Stahlblechs;
Durchführen eines Kaltwalzens auf dem warmgewalzten Stahlblech, um ein kaltgewalztes Stahlblech zu erhalten; und
Glühen des kaltgewalzten Stahlblechs,
wobei beim Glühen des kaltgewalzten Stahlblechs, nachdem das kaltgewalzte Stahlblech bei T1°C, dargestellt in dem nachstehenden Ausdruck 2, bis 1530°C für 30 Sekunden bis 3600 Sekunden gehalten wurde, wenn eine durchschnittliche Abkühlgeschwindigkeit von T1°C auf T2°C, dargestellt im Ausdruck 3, als CR1 in der Einheit °C/s bezeichnet wird und eine durchschnittliche Abkühlgeschwindigkeit von T2°C auf T3°C, dargestellt im Ausdruck 4, als CR2 in der Einheit °C/s bezeichnet wird, das kaltgewalzte Stahlblech auf einen Temperaturbereich von T3°C oder weniger abgekühlt wird, so dass CR1 und CR2 die Ausdrücke 5, 6 und 7 erfüllen:

$$T1 = 17000 \, / \, (14 - \log_{10}([\%Cu]^2 \times [\%S])) - 273 \ldots \text{Ausdruck 2}$$

$$T2 = 17000 \, / \, (14 - \log_{10}([\%Cu]^2 \times [\%S])) - 323 \ldots \text{Ausdruck 3}$$

$$T3 = 17000 \, / \, (14 - \log_{10}([\%Cu]^2 \times [\%S])) - 473 \ldots \text{Ausdruck 4}$$

$$CR1 > CR2 \ldots \text{Ausdruck 5}$$

$$5 \leq CR1 \leq 500 \ldots \text{Ausdruck 6}$$

$$0,5 \leq CR2 \leq 50 \ldots \text{Ausdruck 7}$$

wo [%Cu] ein Cu-Gehalt ausgedrückt in Massen% ist und [%S] ein S-Gehalt ausgedrückt in Massen% ist.

**5.** Das Verfahren zur Herstellung eines nichtorientierten Elektrostahlblechs nach Anspruch 4, wobei CR1 ferner den folgenden Ausdruck 8 erfüllt:

$$CR1 > 20 \ldots \text{Ausdruck 8.}$$

**6.** Das Verfahren zur Herstellung eines nichtorientierten Elektrostahlblechs nach Anspruch 4 oder 5, wobei CR2 ferner den nachstehenden Ausdruck 9 erfüllt:

$$CR2 \leq 20 \ldots \text{Ausdruck 9.}$$

**7.** Das Verfahren zur Herstellung eines nichtorientierten Elektrostahlblechs nach einem der Ansprüche 4 bis 6, ferner umfassend:
im Anschluss an das Glühen des kaltgewalzten Stahlblechs, als ein zusätzliches Glühen, Halten des kaltgewalzten Stahlblechs in einem Temperaturbereich von T2°C oder weniger bis T3°C oder mehr für 30 Sekunden oder länger.

**8.** Das Verfahren zur Herstellung eines nichtorientierten Elektrostahlblechs nach einem der Ansprüche 4 bis 7, wobei beim Glühen des warmgewalzten Stahlblechs, das warmgewalzte Stahlblech so abgekühlt wird, dass CR3, das eine durchschnittliche Abkühlgeschwindigkeit von T1°C auf eine Raumtemperatur darstellt, 15°C/s oder mehr beträgt.

**Revendications**

**1.** Tôle en acier électrique non orientée comprenant des compositions chimiques constituées de, en termes de pourcentage en masse :

C : 0,0001 % à 0,01 % ;
Si : 0,05 % à 7,0 % ;
Mn : 0,01 % à 3,0 % ;
Al : 0,0020 % à 3,0 % ;
S : 0,0001 % à 0,1 % ;
P : 0,0010 % à 0,15 % ;
N : 0,0010 % à 0,01 % ;
Cu : 0,01 % à 5,0 % ; et
éventuellement Mo, W, In, Sn, Bi, Sb, Ag, Te, Ce, V, Cr, Co, Ni, Se, Re, Os, Nb, Zr, Hf et Ta à raison de 0,5 % ou moins au total ; et
éventuellement Mg, Ca, Zn et Ti, où la somme des quantités de Mg, Ca, Zn et Ti est de 0,2 % ou moins ; et
le reste contenant du Fe et des impuretés,
dans laquelle $I_{2\theta=46,4}$, qui est une intensité de diffraction du sulfure de Cu ayant une structure hexagonale représentée par $2\theta = 46,4°$ et $I_{2\theta=32,3}$, qui est une intensité de diffraction du sulfure de Cu ayant une structure cubique représentée par $2\theta = 32,3°$, qui sont obtenues par une diffraction des rayons X d'un résidu d'extraction électrolytique, satisfont à l'expression 1 suivante :

$$I_{2\theta=46,4} \ / \ I_{2\theta=32,3} \leq 0,5 \ldots \text{Expression 1.}$$

**2.** Tôle en acier électrique non orientée selon la revendication 1, dans laquelle, quand la teneur en Cu, en termes de pourcentage en masse, est indiquée par [%Cu], et la teneur en S, en termes de pourcentage en masse, est indiquée par [%S], le [%Cu] et le [%S] satisfont à $[\%Cu] / [\%S] \geq 2,5$.

**3.** Tôle en acier électrique non orientée selon la revendication 1 ou 2, dans laquelle de 0,5 fragment/$\mu m^3$ à 50 fragments/$\mu m^3$ de sulfure contenant du Cu et ayant un diamètre de 5 nm à 500 nm sont contenus.

**4.** Procédé de fabrication de la tôle en acier électrique non orientée selon l'une quelconque des revendications 1 à 3, le procédé comprenant :

la mise en oeuvre d'un laminage à chaud sur une brame pour que soit obtenue une tôle en acier laminée à chaud ;

le recuit de la tôle en acier laminée à chaud ;

le décapage de la tôle en acier laminée à chaud ;

la mise en oeuvre d'un laminage à froid sur la tôle en acier laminée à chaud pour que soit obtenue une tôle en acier laminée à froid ; et

le recuit de la tôle en acier laminée à froid,

dans lequel, lors du recuit de la tôle en acier laminée à froid, après que la tôle en acier laminée à froid a été maintenue à une température allant de T1 °C, qui est représentée par l'expression 2 suivante, à 1530°C, pendant 30 secondes à 3600 secondes, quand la vitesse de refroidissement moyenne de T1 °C à T2 °C, qui est indiquée dans l'expression 3, est représentée par CR1 avec pour unités des °C/s, et la vitesse de refroidissement moyenne de T2 °C à T3 °C, qui est indiquée dans l'expression 4, est représentée par CR2 avec pour unités des °C/s, la tôle en acier laminée à froid est ramenée à une température de l'ordre de T3 °C ou moins de façon que les CR1 et CR2 satisfassent aux expressions 5, 6 et 7 :

$$T1 = 17000 \; / \; (14 - \log_{10}([\%Cu]^2 \; x \; [\%S])) - 273 \; \dots \text{Expression 2}$$

$$T2 = 17000 \; / \; (14 - \log_{10}([\%Cu]^2 \; x \; [\%S])) - 323 \; \dots \text{Expression 3}$$

$$T3 = 17000 \; / \; (14 - \log_{10}([\%Cu]^2 \; x \; [\%S])) - 473 \; \dots \text{Expression 4}$$

$$CR1 > CR2 \; \dots \text{Expression 5}$$

$$5 \leq CR1 \leq 500 \; \dots \text{Expression 6}$$

$$0{,}5 \leq CR2 \leq 50 \; \dots \text{Expression 7}$$

où [%Cu] est la teneur en Cu en termes de pourcentage en masse et [%S] est la teneur en S en termes de pourcentage en masse.

**5.** Procédé de fabrication d'une tôle en acier électrique non orientée selon la revendication 4, dans lequel la CR1 satisfait en outre à l'expression 8 suivante :

$$CR1 > 20 \; \dots \text{Expression 8.}$$

**6.** Procédé de fabrication d'une tôle en acier électrique non orientée selon la revendication 4 ou 5, dans lequel la CR2 satisfait en outre à l'expression 9 suivante :

$$CR2 \leq 20 \; \dots \text{Expression 9.}$$

**7.** Procédé de fabrication d'une tôle en acier électrique non orientée selon l'une quelconque des revendications 4 à 6, comprenant en outre :

suite au recuit de la tôle en acier laminée à froid, le maintien de la tôle en acier laminée à froid à une température située dans la plage allant de T2 °C ou moins à T3 °C ou plus pendant 30 secondes ou plus longtemps, constituant un recuit additionnel.

**8.** Procédé de fabrication d'une tôle en acier électrique non orientée selon l'une quelconque des revendications 4 à 7, dans lequel, lors du recuit de la tôle en acier laminée à chaud, la tôle en acier laminée à chaud est refroidie de façon que CR3, qui est la vitesse de refroidissement moyenne de T1 °C à la température ambiante, soit de 15 °C/s ou plus.

## FIG. 1

$I_{2\theta}=46.4/I_{2\theta}=32.3$

## FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013081078 A
- WO 2012141206 A
- JP 2010174376 A
- JP H10183244 B
- JP H09302414 B
- JP 2011006721 A
- JP 2006144036 A
- JP 2003113451 A

**Non-patent literature cited in the description**

- *CAMP-ISIJ,* 2012, vol. 25, 1080
- *CAMP-ISIJ,* 2009, vol. 22, 1284
- *J. Flux Growth,* 2010, vol. 5, 48
- *Materials Transactions,* 2012, vol. 53, 645
- *Tetsu-to-Hagane,* 1997, vol. 83, 479
- *Tetsu-to-Hagane,* 2006, vol. 92, 609